# EUROPÄISCHE PATENTANMELDUNG

(11) **EP 2 529 631 A1**
(43) Veröffentlichungstag der Anmeldung: **05.12.2012**
(21) Anmeldenummer: 11165708.6
(22) Anmeldetag: 11.05.2011
(51) Int. Cl.: A23G 1/20, A23G 3/02, A23G 3/20

(54) **Deckelschaber, Schabvorrichtung und Vorrichtung zur Herstellung eines Verzehrgutes mit Schnellwechselsystem und Verfahren zur Wartung einer Schabvorrichtung**

(71) Anmelder: Bühler Bindler GmbH, 51702 Bergneustadt (DE)
(72) Erfinder: Brungs, Lars, 51580 Reichshof-Schönenbach (DE)
(74) Vertreter: Nieswand, Martina

(57) **Zusammenfassung**

Die vorliegende Erfindung betrifft Deckelschaber (1) und Schabvorrichtungen zur Abstreifung von Füllmasse von gefüllten Hohlformen in einer Fördereinrichtung. Der Deckelschaber dient der Abstreifung in einer Schabrichtung von Füllmasse von gefüllten Hohlformen in einer Fördereinrichtung. Der erfindungsgemässe Deckelschaber umfasst mindestens ein Schabelement (2), das mittelbar oder unmittelbar an einem Träger (3) angeordnet ist. Der Deckelschaber (1) weist mindestens ein Passprofil (4) auf, das derart mit einem formkomplementären Gegenpassprofil (6) verbindbar ist, dass ein Lösen nicht durch eine Bewegung des Deckelschabers (1) senkrecht zu der Schabrichtung und/oder der Förderrichtung oder senkrecht zur Bearbeitungsfläche möglich ist.

## Beschreibung

Die vorliegende Erfindung betrifft Deckelschaber und Schabvorrichtungen zur Abstreifung von Füllmasse von gefüllten Hohlformen in einer Fördereinrichtung. Die vorliegende Erfindung betrifft zudem Vorrichtungen zur Herstellung eines Verzehrgutes mit besagten Schabvorrichtungen, sowie Verfahren zur Wartung von Schabvorrichtungen. Insbesondere betrifft die vorliegende Erfindung die Abstreifung visköser Fettmassen jeweils entsprechend den Oberbegriffen der unabhängigen Ansprüche.

Bei der industriellen Verarbeitung von Nahrungsmitteln mit oder aus Füllmassen, insbesondere im Bereich der Süsswarenverzehrgüter werden Giessvorrichtungen verwendet. Dabei werden visköse Füllmassen, insbesondere Fettmassen wie Schokolade oder Kakaobutter mittels einer Giessvorrichtung in eine Hohlform gegossen. Die mit Füllmasse gefüllten Hohlformen werden anschliessend ausgekühlt und als fertige Produkte, in der Form von z.B. Schokoladeerzeugnissen, aus den Hohlformen entfernt. Bei gefüllten Süsswarenprodukten, wie z.B. Pralinen, kann vorgängig die Hohlform gekippt werden, sodass nur ein dünner Film der Füllmasse an den Innenrändern der Hohlform erhalten bleibt, oder aber die mit Füllmasse gefüllte Hohlform kann kalt gestempelt werden, sodass die Füllmasse selbst eine Hohlform bildet die mit einer zweiten Füllmasse befüllt werden kann. Anschliessend werden solche Pralinen mit einer weiteren Schicht "Deckelmasse" der ersten Füllmasse gedeckelt.

Solche Verfahren sind im Stand der Technik bekannt und können beispielsweise aus "Industrial Chocolate Manufacture and Use" (Beckett, S.T.; Fourth Edition, Blackwell Publishing, Ltd.; UK) entnommen werden.

Gemein ist den Verfahren welche Hohlformen mit Füllmasse befüllen, dass in der Regel ein Überschuss an Füllmasse in die Hohlformen gegossen wird.

Um diesen Überschuss zu entfernen und etwa der Produktionskette wieder zuzufügen, sind im Stand der Technik Deckelschaber bekannt.

Gängigerweise wird bei mit Fördereinrichtungen versehenen Giessanlagen ein Spachtel fix angebracht, der im Wesentlichen aus einem in einem spitzen Winkel zur Förderrichtung stehenden Abstreifblech besteht. Im Betrieb werden die Gussformen in Förderrichtung gegen den fixen Spachtel geschoben und die überschüssige Füllmasse wird so abgestreift.

Nachteilig an diesem Aufbau ist allerdings, dass die abgeschabte Masse vor oder hinter dem fixen Spachtel hergeschoben wird und dabei die Förderleistung der Maschine erheblich beeinträchtigt wird oder gar ein regelmässiges manuelles Entfernen erforderlich ist.

US 5074775 beschreibt ein Spachtelsystem für die Oberflächenreinigung von Gussformen in Giessvorrichtungen. Die Nachteile von fixen Spachteln, welche an Fördereinrichtungen gegenläufig zur Förderrichtung angebracht sind, werden in diesem Dokument überwunden. Ein Spachtel ist senkrecht zur Förderrichtung bewegbar und streicht die Oberfläche der Fördereinrichtung in einer Richtung ab. Nach der Abstreifbewegung wird der Spachtel angehoben und in seine Ausgangsposition zurückgebracht. Ein solcher Spachtel ist allerdings einem erheblichen Verschleiss ausgesetzt. Da der Spachtel fix an einem Träger befestigt ist, entsteht dadurch ein erheblicher Wartungsaufwand, wenn der Spachtel ausgewechselt oder gewartet werden muss. Auch gestaltet sich eine spezifische Anpassung an die zu verarbeitende Gussmasse oder Gussform schwierig. So wird zum Beispiel je nach gewünschtem Produkt ein spezifischer Schabwinkel eingestellt.

Es ist somit eine Aufgabe der vorliegenden Erfindung, die Nachteile des Bekannten zu überwinden und einen Deckelschaber, eine Schabvorrichtung und eine Vorrichtung zur Herstellung eines Verzehrgutes sowie ein Verfahren zur Wartung einer Schabvorrichtung bereitzustellen, welche die Wartung erheblich vereinfacht an die spezifischen Kundenerfordernisse angepasst werden kann und eine im wesentlichen vereinfachte Wartung der Verschleissteile ermöglicht.

Dies wird mit einem Deckelschaber, einer Schabvorrichtung und einer Vorrichtung zur Herstellung eines Verzehrgutes sowie einem Verfahren zur Wartung einer Schabvorrichtung gemäss kennzeichnendem Teil der unabhängigen Ansprüche gelöst.

Ein Aspekt der vorliegenden Erfindung betrifft einen Deckelschaber. Der Deckelschaber dient der Abstreifung in einer Schabrichtung von Füllmasse von gefüllten Hohlformen in einer Fördereinrichtung. Der erfindungsgemässe Deckelschaber ist besonders geeignet zur Abstreifung visköser Fettmassen.

Der erfindungsgemässe Deckelschaber umfasst mindestens ein Schabelement, das mittelbar oder unmittelbar an einem Träger angeordnet ist. Im Sinne der vorliegenden Erfindung ist ein Schabelement ein Element, welches inm Betrieb mindestens einen Teil oder die ganze Überschussmasse von gefüllten Hohlformen abzustreifen vermag. Das Schabelement kann direkt, das heisst unmittelbar an einem Träger angeordnet sein, z.B. indem das Schabelement einstückig ausgebildet ist und an einen Träger angeordnet ist. Oder das Schabelement ist mittelbar in dem das Schabelement über eine Verbindungsvorrichtung an dem Träger angeordnet. Die Verbindungsvorrichtung kann eine gelenkige Verbindung umfassen. Der Träger weisst ausserdem ein Passprofil auf, das derart mit einem formkomplementären Gegenpassprofil verbindbar ist, dass ein Lösen nicht durch eine Bewegung des Deckelschabers senkrecht zu der Schabrichtung und/oder der Förderrichtung oder seknrecht zur Bearbeitungsfläche möglich ist. Das Schabelement ist also so befestigt, dass es nicht aus der Form fallen kann, selbst wenn eine zusätzliche kraftschlüssige Verbindung gelöst wird. Bevorzugt ist das formkomplementäre Gegenpassprofil am einstückigen Schabelement oder am Verbindungselement des Schabelements ausgebildet. Im Sinne der vorliegenden Erfindung bedeutet Passprofil und formkomplementäres Gegenpassprofil, dass die beiden Elemente, Schabelement und Träger, in montierter Form in einem, im Wesentlichen formschlüssigen, Kontakt zueinander stehen. Die beiden Profile können z.B. durch einen komplementären Schliff oder Guss passförmig zueinander hergestellt werden.

Somit ist es möglich, das Schabelement bei der Wartung des Schabelements durch eine Bewegung z. Bsp. parallel zur Schabrichtung zu lösen. In einer bevorzugten Ausführungsform ist das Schabelement mit einem Verbindungselement ausgestattet, welches in der Art eines Lineargleitlagers in ein komplementäres Profil des Trägers eingepasst werden kann. Bevorzugt verläuft das Lineargleitlager parallel zur Schabrichtung des Deckelschabers.

Das Schabelement kann je nach Verwendung aus unterschiedlichen Materialien gefertigt sein. Besonders bevorzugt wird Edelstahl oder ein Kunststoff, wie z.Bsp. PU verwendet.

In einer bevorzugten Ausführungsform weist der Deckelschaber mindestens ein weiteres Form- und oder Kraftschlusselement zur Arretierung des Trägers an der Maschinenführung auf. Besonders bevorzugt weist der Deckelschaber einen Bolzenstift und/oder eine Klemmschraube auf.

Somit lässt sich der Deckelschaber einfach warten, indem z.B. der Bolzenstift oder die Klemmschraube entfernt wird. Letztere dienen der Sicherung des Schabelements während des Betriebs. Besonders bevorzugt lässt sich der Deckelschaber ohne Spezialwerkzeug warten.

In einer bevorzugten Ausführungsform ist das Schabelement pflugförmig ausgestaltet. Ein Pflugförmiger Schaber kann z.B. aus zwei in einem bestimmten Winkel zueinander stehenden Platten ausgebildet sein und dient vornehmlich der Entfernung von überschüssiger Masse über einer Gussform. Ein Pflugschaber ist bevorzugt so ausgerichtet, dass er keinen Kontakt mit der Gussform im Betrieb herstellt. Die Platten können aus Stahl oder Kunststoff gefertigt sein. Die Platte kann insbesondere im Bereich des Formenkontaktes sehr dünn ausgestaltet sein. Vorzugsweise ist sie zwischen 0.4 mm bis 1.2 mm dick, besonders bevorzugt zwischen 0.6 und 1.1 mm dick, besonders bevorzugt zwischen 0.8 und 1 mm dick.

In einer anderen bevorzugten Ausführung ist das Schabelement als eine im Wesentlichen rechteckige Platte ausgestaltet. Eine solche Platte kann als Fertigschaber eingestellt werden, sodass sie in Betrieb einen Kontakt mit der Gussform herstellt und somit einen Glattzug, respektive eine Glättung der Oberfläche der Füllmasse in der Hohlform erwirkt.

In einer weiteren bevorzugten Ausführungsform ist das Schabelement an einem Schabelementhalter angebracht, der bevorzugt gelenkig und/oder arretierbar an dem Träger befestigt ist. Besonders bevorzugt weist der Schabelementhalter Mittel auf, um einen Neigungswinkel des Schabelements in Bezug auf die Oberfläche der Fördereinrichtung einzustellen. Zu diesem Zweck kann beispielsweise eine Klemmschraube dienen. Weiterhin können Rastscheiben zur Einstellung des Winkels verwendet werden. Besonders bevorzugt werden sowohl Klemmschraube und Rastscheibe zur Winkeleinstellung verwendet.

Ein weiterer Vorteil des erfindungsgemässen Deckelschabers ergibt sich, wenn die Winkeleinstellung vorgenommen werden muss. Das Schabelement kann ohne Spezialwerkzeug vom Träger abmontiert werden und anschliessend kann die Winkeleinstellung weitaus exakter vorgenommen werden, als bei einem fix in der Maschine angebrachten Schabelement.

In einer bevorzugten Ausführungsform ist ein Federelement zwischen dem Schabelement und dem Träger angebracht. Dieses Federelement dient dazu, die auf das Schabelement wirkende Anpresskraft zumindest teilweise zu kompensieren. Solche Federelemente sind im Stand der Technik bekannt. Als besonders geeignet haben sich pneumatische Federelemente erwiesen. In einer besonders bevorzugten Ausführungsform wird der Deckelschaber von einem Pneumatikzylinder durch Druckanpassung mit einer variablen Dämpfung versehen.

In einer bevorzugten Ausführungsform weist das Passprofil eine Anschlagfläche für Querkräfte auf. Beispielsweise kann ein Linearlager so ausgestaltet sein, dass die seitlichen Kontaktflächen des Lagers als Anschlagsfläche für Querkräfte dienen können. In einer besonders bevorzugten Ausführungsform weist das Passprofil ein im Wesentlichen schwalbenschwanzförmiges Profil auf. Die Anschlagsfläche kann z.B. an einer schwalbenschwanzförmigen Verjüngung des Linearlagers ausgebildet sein. Durch die schwalbenschwanzförmige Ausgestaltung kann z.B. das Schabelement in den Träger befestigt oder bespannt werden. Das Schabelement ist im Wesentlichen formschlüssig in den Träger einpassbar.

In einer weiteren bevorzugten Ausführungsform schliesst das Schabelement mit einer zum Schabelement weisenden Fläche des Trägers einen Winkel ein. Der Winkel ist vorzugsweise verstellbar, insbesondere ist der Winkel in einem Bereich zwischen 30° und 90° verstellbar, bevorzugt in einem Bereich von zwischen 30° und 60° verstellbar.

In einer besonders bevorzugten Ausführungsform ist der Winkel über eine Schraube verstellbar, besonders bevorzugt über eine Rastschraube verstellbar.

In einer bevorzugten Ausführungsform verläuft die Anschlagfläche im Wesentlichen parallel zur Schabrichtung des Deckelschabers. In einer bevorzugten Ausführungsform verfügt das im Wesentlichen rechteckige Schabelement verfügt über eine lange Seite, welche zur Abstreifung des Füllmaterials ausgebildet ist und eine kurze Seite, welche zur Einpassung in das Passprofil des Trägers eine z.B. schwalbenschwanzförmige Anschlagfläche aufweist. Die Anschlagfläche ist so ausgelegt, dass sie parallel zu der kurzen Seite des Schabelements verläuft.

Ein weiterer Aspekt der vorliegenden Erfindung betrifft eine Schabvorrichtung zur Abstreifung von Füllmasse von gefüllten Hohlformen in einer Fördereinrichtung. Diese Schabvorrichtung ist besonders geeignet zur Abstreifung visköser Fettmassen.

Die Schabvorrichtung umfasst einen Deckelschaber mit mindestens einem Schabelement das unmittelbar oder mittelbar an einem Träger angeordnet ist. Der Träger weisst zudem ein Passprofil auf, dass derart mit einem formkomplementären Gegenpassprofil verbindbar ist, dass ein Lösen nicht durch eine Bewegung des Deckelschabers senkrecht zu der Schabrichtung möglich ist. Die Schabvorrichtung umfasst weiterhin eine Maschinenführung mit einem Gegenpassprofil zur Aufnahme des Passprofils des Deckelschabers.

Die Schabvorrichtung kann zudem mit einem Antriebsagregat zur Bewegung des Deckelschabers ausgestattet sein. Besonders geeignete Antriebsagregate können z.B. Servoantriebe, Pneumaktikantriebe oder Linearantriebe sein.

Besonders bevorzugt ist die Schabvorrichtung ausgestaltet, dass das Antriebsagregat eine Maschinenführung antreibt. Bevorzugt ist die Maschinenführung im Wesentlichen quer zur Förderrichtung der Fördereinrichtung bewegbar.

Besonders bevorzugt weist die Maschinenführung eine erste Bewegungsachse A - A' auf, welche im Wesentlichen quer zur Förderrichtung angeordnet ist. Entlang dieser Bewegungsachse ist der Deckelschaber bewegbar. Die Schabvorrichtung weist zudem eine zweite Bewegungsachse B - B' auf, welche im Wesentlichen senkrecht zur Bearbeitungsfläche angeordnet ist. Auch entlang dieser Bewegungsachse ist der Deckelschaber bewegbar.

Im Betrieb kann somit eine erste Schabbewegung durchgeführt werden in der Bewegungsachse A - A'. Um den Deckelschaber wieder in die Ausgangsposition zurück zu befördern wird der Deckelschaber in der zweiten Bewegungsachse B - B' angehoben und anschliessend in einer umgekehrten Bewegung zur ersten Bewegungsachse A' - A wieder in die Ausgangsposition zurückbefördert. Um den allenfalls erforderlichen Kontakt mit der Gussform wieder herzustellen, wird der Deckelschaber in einer weiteren zur zweiten Bewegungsachse umgekehrten Bewegung B' - B der Deckelschaber wieder in die Ausgangsposition zurückbefördert.

Ein weiterer Aspekt der vorliegenden Erfindung betrifft eine Vorrichtung zur Herstellung eines Verzehrgutes. Die Vorrichtung weist mindestens zwei Schabvorrichtungen wie eingängig beschrieben auf. Bevorzugt sind die Schabvorrichtungen in Förderrichtung hintereinander angeordnet.

Besonders bevorzugt umfasst die Vorrichtung eine erste und eine zweite Maschinenführung. Die erste Maschinenführung weist einen Deckelschaber auf, bei dem das Schabelement flugförmig ausgestaltet ist. Mit diesem Deckelschaber kann in einem ersten Verarbeitungsschritt eine grosse Menge Füllmasse von den Gussformen abgestreift werden. Die zweite Maschinenführung weist einen Deckelschaber auf, bei dem das Schabelement als eine im Wesentlichen rechteckige Platte ausgestaltet ist. Mit diesem Schabelement kann in einem zweiten Schritt die Oberfläche der Füllmasse in den gefüllten Hohlformen glatt gezogen oder geglättet werden.

Ein weiterer Aspekt der vorliegenden Erfindung betrifft ein Verfahren zur Wartung einer Schabvorrichtung einer Fördereinrichtung. Ein Deckelschaber wie eingängig beschrieben wird aus der Schabvorrichtung entfernt oder montiert. Das Entfernen und/oder Montieren wird werkzeuglos ausgeführt.

Im folgenden wird die vorliegende Erfindung anhand von Ausführungsbeispielen und Zeichnungen erläutert, ohne sich auf diese zu beschränken.
- Figur 1 zeigt eine schematische Zeichnung eines zum erfindungsgemässen Deckelschaber gehörenden Schabelements in perspektivischer Ansicht.

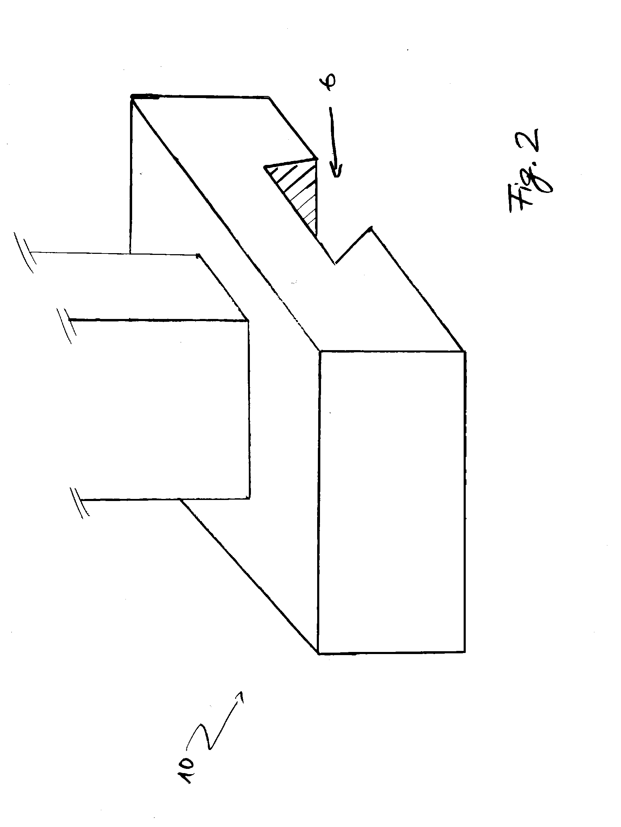

- Figur 2 zeigt eine schematische Zeichnung eines Trägers eines erfindungsgemässen Deckelschabers.
- Figur 3 zeigt eine schematische Zeichnung eines erfindungsgemässen Deckelschabers in perspektivischer Ansicht.
- Figur 4 zeigt eine schematische Schnittansicht des Deckelschabers aus Figur 3.
- Figur 5 zeigt eine schematische Schnittansicht eines erfindungsgemässen Deckelschabers.
- Figur 6 zeigt eine schematische Zeichnung eines pflugförmigen erfindungsgemässen Deckelschabers.
- Figur 7 zeigt eine schematische Schnittansicht des Deckelschabers aus Figur 6.

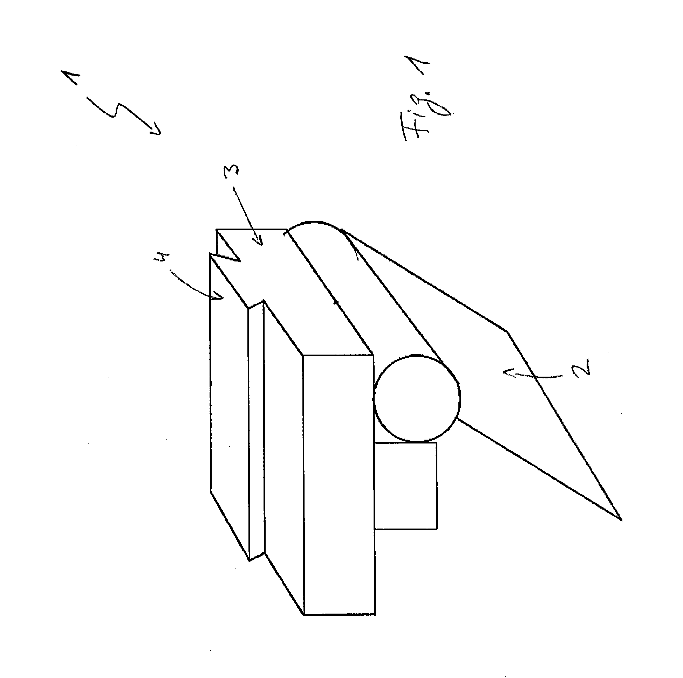

Figur 1 zeigt einen erfindungsgemässen Deckelschaber 1 mit einem Schabelement 2 aus Gummi oder Stahl, welcher in einem bestimmten Winkel **a** zu einer ebenen Fläche vom Träger 3 absteht. Der Träger 3 weist ein Schwalbenschwanzprofil 4 auf. Das Schwalbenschwanzprofil 4 kann in ein formkomplementäres Gegenpassprofil 6 an einer Maschinenführung 10 eingeführt werden.

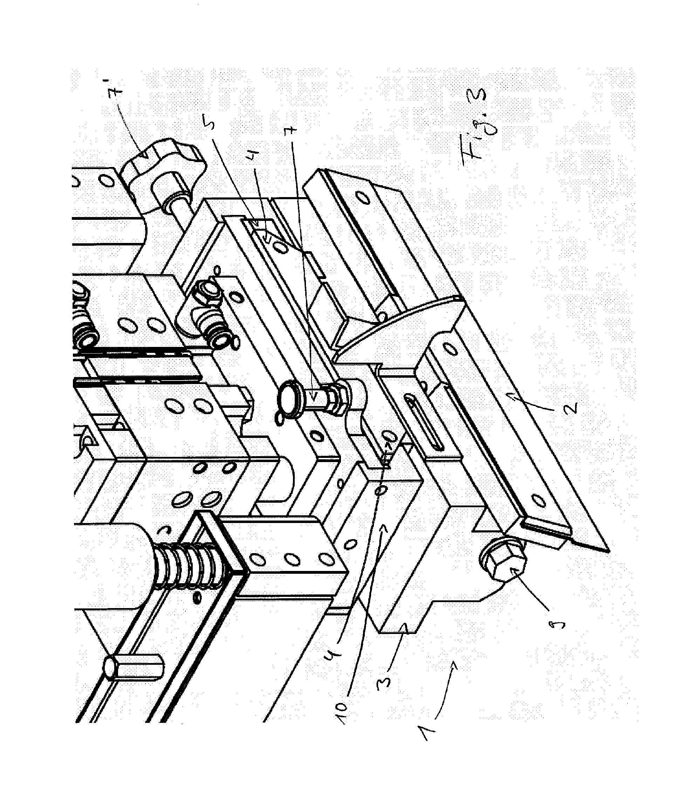

Figur 3 zeigt einen in die Maschinenführung 10 eingepasster Deckelschaber 1. Der Deckelschaber 1 weist ein Schabelement 2 auf, welches als im Wesentlichen rechteckige Platte aus Stahlblech ausgebildet ist. Das Stahlblech 2 und die Ebene zur Trägervorrichtung 3 schliessen einen Winkel **a** ein. Der Winkel **a** kann mittels einer Rastschrauben 9 verstellt werden. Das Passprofil 4 an der Trägervorrichtung 3 ist schwalbenschwanzförmig ausgebildet und in ein formkomplementäres Gegenpassprofil eingeführt. Eine Arretierung 7' in der Form einer Klemmschraube sichert den Deckelschaber 1 an der Maschinenführung 10. Ein Bolzenstift 7 dient als zusätzliche Sicherung. Zur Aufnahme des Passprofils 4 verfügt die Maschinenführung 10 über ein komplementäres Gegenpassprofil 5. Im vorliegenden Beispiel ist das Schabelement 2 2450 mm hoch, in Förderrichtung 1400 mm lang und in Schabrichtung 2000 mm breit.

Im Betrieb wird das abgeschabte Material über eine Reinigungsvorrichtung (nicht gezeigt) in einen Auffangbehälter befördert und kann gegebenenfalls weiterverarbeitet werden.

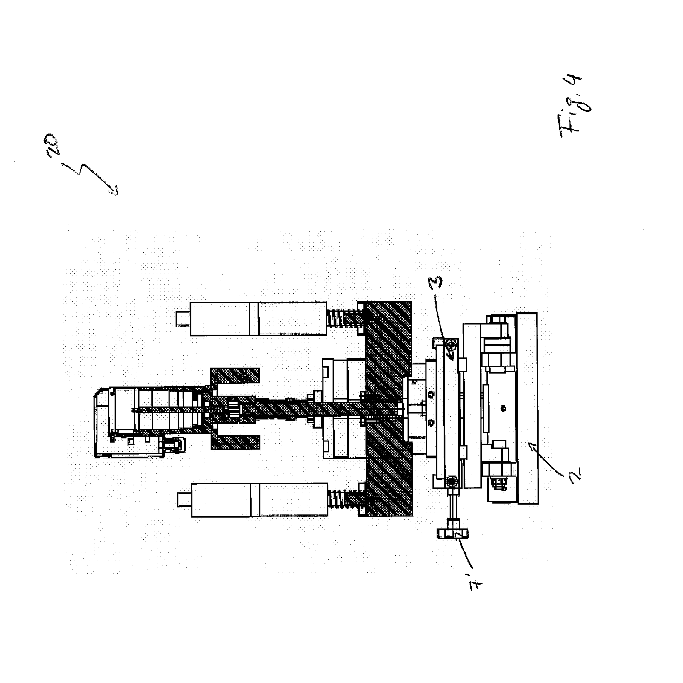

Figur 4 zeigt eine Aufsicht auf eine Schabvorrichtung 20 mit einem montierten Deckelschaber. Ein Schabelement 2 ist an einer Trägervorrichtung 3 befestigt und mittels einer Klemmschrauben 7' gesichert.

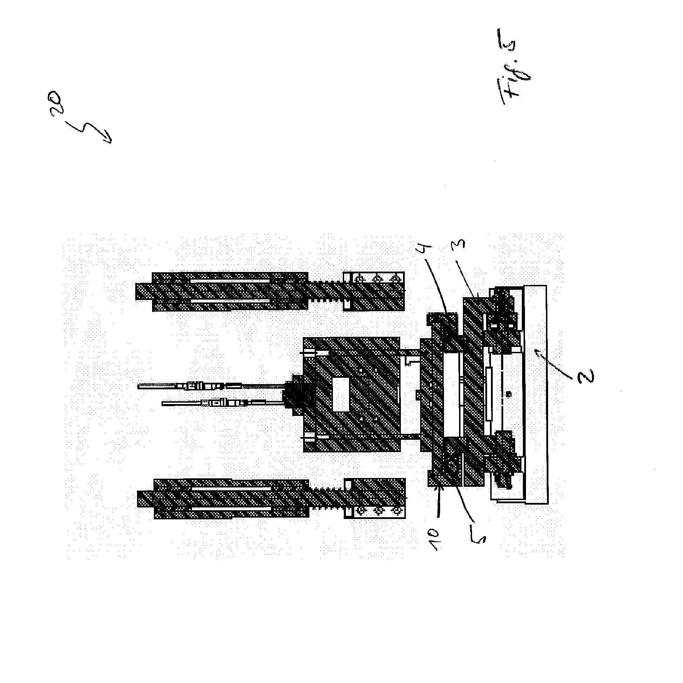

In der zur Figur 4 gehörenden Schnittansicht in Figur 5 ist das Schabelement 2 ersichtlich, welches über die Trägervorrichtung 3 mit einem schwalbenschwanzförmigen Passprofil 4 in ein formkomplementäres Gegenpassprofil 5 an der Maschinenführung 10 eingepasst ist, so dass es sich nicht in vertikaler Richtung lösen lässt.

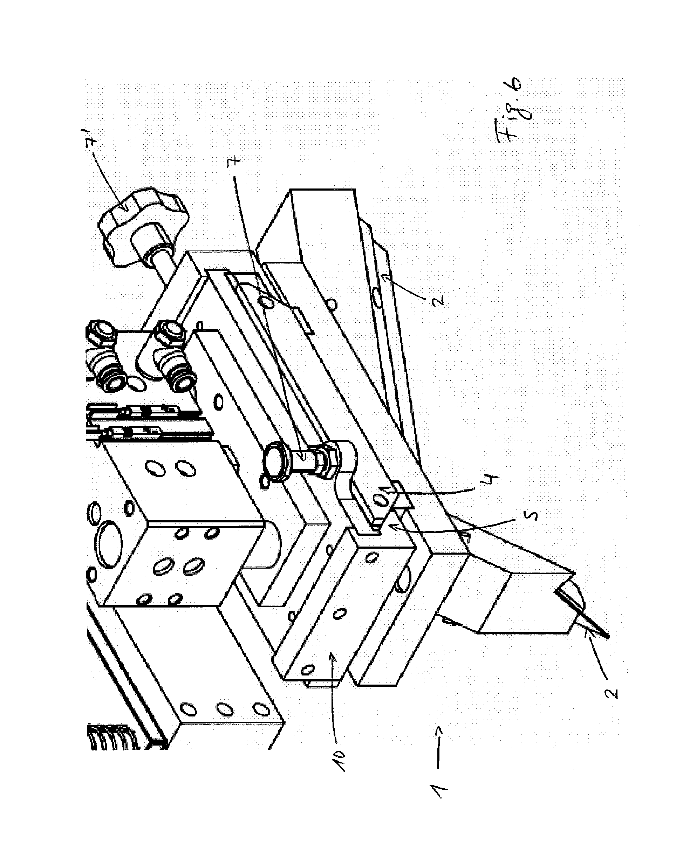

Figur 6 zeigt einen flugförmigen Deckelschaber 1. Ein Schabelement 2 ist über eine Trägervorrichtung 3 mittels eines Passprofils 4 in ein komplementäres Gegenpassprofil 5 an der Maschinenführung 10 eingepasst. Eine Klemmschraube 7' sowie ein Bolzenstift 7 sichern das Schabelement an der Maschinenführung 10.

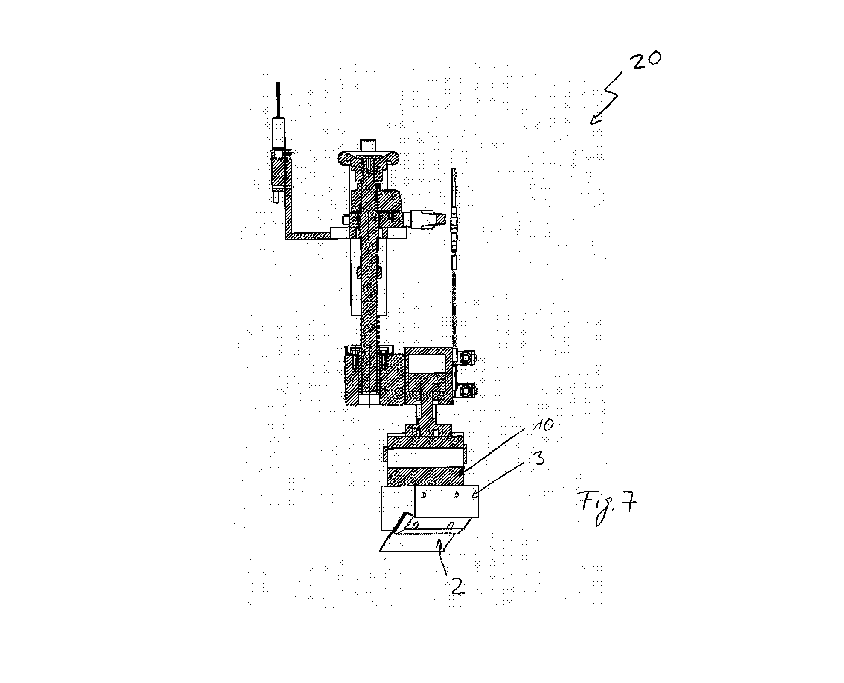

Figur 7 zeigt eine Schnittansicht einer Schabvorrichtung 20 mit einem flugförmigen Schabelement 2 an einer Trägervorrichtung 3, welche in eine Maschinenführung 10 formschlüssig eingepasst ist.

Beispiel:
Bei einer Vorrichtung zur Herstellung einen Verzehrgutes wird je ein Schabelement gemäss den Fig. 3 und 6 hintereinander angeordnet. Die beiden Schaber vollführen gleichzeitig eine Entgegengesetzte Schabbewegung über eine Gussform mit Verzehrgut, welches vorher mit Füllmasse befüllt oder gedeckelt wurde.

Es versteht sich von selbst, dass alle hier gezeigten Ausführungsformen in beliebiger Kombination zueinander ausgestaltet werden können.

## Patentansprüche

1. Deckelschaber (1) zur Abstreifung von Füllmasse von gefüllten Hohlformen in einer Fördereinrichtung, insbesondere zur Abstreifung viskoser Fettmassen in einer Schabrichtung, umfassend:
mindestens ein Schabelement (2), das mittelbar oder unmittelbar an einem Träger (3) angeordnet ist, **dadurch gekennzeichnet, dass** der Träger (3) ein Passprofil (4) aufweist, das derart mit einem formkomplementären Gegenpassprofil verbindbar ist, dass ein Lösen nicht durch eine Bewegung des Deckelschabers senkrecht zu der Schabrichtung und/oder Förderrichtung möglich ist.

2. Deckelschaber (1) gemäss Anspruch 1, wobei der Deckelschaber (1) mindestens ein weiteres Form- und/oder Kraftschlusselement (7, 7') zur Arretierung des Trägers (3) an der Maschinenführung (10) aufweist, insbesondere einen Bolzenstift (7) und/oder eine Klemmschraube (7').

3. Deckelschaber (1) gemäss Anspruch 1 oder 2, wobei das Schabelement (2) pflugförmig oder als eine im Wesentlichen rechteckige Platte ausgestaltet ist.

4. Deckelschaber (1) gemäss einem der Ansprüche 1 bis 3, wobei das Schabelement (2) an einem Schabelementhalter angebracht ist, der bevorzugt gelenkig und/oder arretierbar an dem Träger (3) befestigt ist ist.

5. Deckelschaber (1) gemäss einem der Ansprüche 1 - 4, wobei zwischen dem Schabelement (2) und dem Träger (3) ein Federelement angebracht ist, welches eine auf das Schabelement (2) wirkende Anpresskraft im Wesentlichen kompensiert.

6. Deckelschaber (1) gemäss einem der Ansprüche 1 - 5, wobei das Passprofil (4) eine Anschlagfläche für Querkräfte aufweist, insbesondere ein im Wesentlichen schwalbenschwanzförmiges Profil (4).

7. Deckelschaber (1) gemäss einem der Ansprüche 1 - 6, wobei das Schabelement (4) mit einer zum Schabelement weisenden Fläche () des Trägers (3) einen Winkel (α) einschliesst, der verstellbar ist, insbesondere zwischen 30 und 60 Grad.

8. Deckelschaber (1) gemäss Anspruch 7, wobei der Winkel über eine Schraube (9) verstellbar ist.

9. Deckelschaber (1) gemäss einem der Ansprüche 6 - 8, wobei die Anschlagfläche im Wesentlichen parallel zur Schabrichtung des Deckelschabers (1) verläuft.

10. Schabvorrichtung (20) zur Abstreifung von Füllmasse von gefüllten Hohlformen in einer Fördereinrichtung, insbesondere zur Abstreifung visköser Fettmassen, umfassend einen Deckelschaber (1) gemäss Anspruch 1-9, umfassend:
mindestens ein Schabelement (2), das mittelbar oder unmittelbar an einem Träger (3) angeordnet ist, wobei der Träger (3) ein Passprofil (4) aufweist, und mindestens einer Maschinenführung (10) mit einem Gegenpassprofil (6) zur Aufnahme des Passprofils (5) des Deckelschabers (1);
wobei das Passprofil derart mit dem Gegenpassprofil verbindbar ist, dass ein Lösen nicht durch eine Bewegung des Deckelschabers senkrecht zu der Schabrichtung und/oder Förderrichtung möglich ist.

11. Schabvorrichtung (20) gemäss Anspruch 10, wobei die Maschinenführung (10) im Wesentlichen quer zur Förderrichtung der Fördereinrichtung bewegbar ist.

12. Schabvorrichtung (20) gemäss Anspruch 10, wobei die Maschinenführung (10) eine erste Bewegungsachse A - A' aufweist, welche im wesentlichen quer zur Förderrichtung angeordnet ist und entlang derer der Deckelschaber bewegbar ist, sowie eine zweite Bewegungsachse B - B' aufweist, welche im Wesentlichen senkrecht zur Bearbeitungsfläche angeordnet ist, entlang derer der Deckelschaber bewegbar ist.

13. Vorrichtung zur Herstellung eines Verzehrgutes mit mindestens zwei Schabvorrichtungen (20) gemäss einem der Ansprüche 10 bis 12, welche in Förderrichtung hintereinander angeordnet sind.

14. Vorrichtung gemäss Anspruch 13, umfassend eine erste und eine zweite Maschinenführung (10), wobei die erste Maschinenführung (10) einen Deckelschaber (1) aufweist, bei dem das Schabelement (2) pflugförmig ausgestaltet ist, und
wobei die zweite Maschinenführung (10) einen Deckelschaber (1) aufweist, bei dem das Schabelement (2) als eine im Wesentlichen rechteckige Platte ausgestaltet ist.

15. Verfahren zur Wartung einer Schabvorrichtung (20) einer Fördereinrichtung, insbesondere zur Abstreifung visköser Fettmassen, umfassend die Schritte:
Entfernen und/oder Montieren eines Deckelschabers (1), insbesondere eines Deckelschabers (1) gemäss Anspruch 1, aus der Schabvorrichtung (20)
**dadurch gekennzeichnet, dass**
besagtes Entfernen/und oder Montieren werkzeuglos ausgeführt wird.
